# EUROPEAN PATENT APPLICATION

(11) **EP 2 713 261 A2**
(43) Date of publication of application: **02.04.2014**
(21) Application number: 13185902.7
(22) Date of filing: 25.09.2013
(51) Int. Cl.: G06F 3/0488, G06F 3/0482

(54) **System supporting manual user interface based control of an electronic device**

(30) Priority: 26.09.2012 KR 20120106974
(71) Applicant: Samsung Electronics Co., Ltd, Gyeonggi-do 443-742 (KR)
(72) Inventor: Han, Young-Eun, Gyeonggi-do (KR); Song, Se-Jun, Seoul (KR); Lee, Da-Som, Seoul (KR)
(74) Representative: Gover, Richard Paul

(57) **Abstract**

A system supports user interface based control of an electronic device by identifying a first region in a displayed area on a screen of the electronic device, determining a size of an object for display in the first region, and, in response to the determined object size, displaying at least one of a plurality of objects comprising the displayed area, in the first region.

## Description

### FIELD OF THE INVENTION

The present invention relates to a system for providing a user interface supporting manual control of an electronic device via a touch screen, for example.

### BACKGROUND

Electronic devices are modem necessities providing various multimedia services such as a voice and video call function, an information input and output function, and data storage. The prevalence of these devices and associated growth in data processing increases the quantity of multimedia data needing to be processed and displayed. The result is a need for improved processing of multimedia data and improved presentation of the multimedia data on an electronic device screen. Specifically, there is a need for improving space utilization to expand quantity and viewability of information presented on a display unit such as a touch screen, for example.

A touch screen enables elimination of a separate input device such as a keypad and increases room for a display area. A touch unit covering a full screen can substantially cover a device front surface maximizing screen size. However, an increase of the display area may adversely affect electronic device control making a device difficult to manage information in a display area and control the device. A system according to invention principles addresses this deficiency and related problems

### SUMMARY

A system according to invention principles provides a user interface for easy manipulation of a selectable object displayed in a display region in an electronic device with a touch screen, for example. The system supports moving a selectable object, which is displayed in a display region, to a partial region of the display region in an electronic device with a touch screen.

A method supports user interface based control of an electronic device, by: determining a first region in a displayed area on a screen of the electronic device; determining a size of an object for display in the first region; and in response to the determined object size, displaying at least one of a plurality of objects within the displayed area, in the first region. The method replaces at least one object displayed in the first region with at least one other object.

In a feature of the invention the method determines the first region by: if a touch on the display area is sensed, determining a partial region of the display area as the first region, in response to touch information. The method further determines the size of the object for displaying in the first region by: sensing a touch; and determining the size of the object for displaying in the first region, in response to a touched area size. The object size is determined in response to a size of the first region and the number of objects to be displayed in the first region. The method sorts the at least one object in response to a sorting condition comprising at least one of an execution order of an object, an execution count of the object, and an execution holding time of the object; and displays the at least one object in the first region according to sorting order.

In a further feature of the invention, a method supports control of an electronic device by: determining a first region in a display area; displaying at least one of a plurality of objects of the display area, in the first region; and replacing the at least one object displayed in the first region with at least one other object.

In another feature an electronic device comprises: at least one processor for executing computer programs; at least one touch screen for detecting the presence and location of a touch; a memory for storing data and instructions; and at least one program stored in the memory and configured to be executable by the at least one processor, and the program comprises instructions determining a first region in a display area, determining a size of an object to be displayed in the first region, and displaying at least one of a plurality of objects of the display area, in the first region in response to the determined object size.

In an additional invention feature an electronic device comprises: at least one processor for executing computer programs; at least one touch screen for detecting the presence and location of a touch; a memory for storing data and instructions; and at least one program stored in the memory and configured to be executable by the at least one processor, and the program comprises instructions for determining a first region in a display area, displaying at least one of a plurality of objects within the display area, in the first region, and changing the at least one object displayed in the first region, to at least one other object.

Preferably, the device is at least one processor for executing computer programs; at least one touch screen for detecting the presence and location of a touch; a memory for storing data and instructions; and at least one program stored in the memory and configured to be executable by the at least one processor, wherein the program comprises instructions determining a first region in a display area, determining a size of an object to be displayed in the first region, and displaying at least one of a plurality of objects of the display area, in the first region in response to the determined object size.

Preferably, the device is further comprising an instruction of, after displaying at least one of a plurality of objects, changing at least one object displayed in the first region with at least one another object.

Preferably, the device is wherein the instructions for determining the first region, if a touch on the display area is sensed, determine a partial region of the display area as the first region, in response to touch information.

Preferably, the device is wherein the instructions for determining the size of the object for displaying in the first region, senses a touch, and determines the size of the object for displaying in the first region, in response to a touched area.

Preferably, the device is wherein the instruction of determining the size of the object determines the size of the object in response to a size of the first region and the number of objects to be displayed in the first region.

Preferably, the device is wherein the instructions for displaying the at least one object, sorts the at least one object in response to a sorting condition; and displays the at least one object in the first region according to sorting order.

Preferably, the device is wherein the sorting condition comprises at least one of an execution order of an object, an execution count of the object, and an execution holding time of the object.

Preferably, the device is at least one processor for executing computer programs; at least one touch screen for detecting the presence and location of a touch; a memory for storing data and instructions; and at least one program stored in the memory and configured to be executable by the at least one processor, wherein the program comprises instructions for determining a first region in a display area, displaying at least one of a plurality of objects within the display area, in the first region, and changing the at least one object displayed in the first region, to at least one other object.

Preferably, the device is wherein the instructions for determining the first region, if a touch on the display area is sensed, determine a partial region of the display area as the first region, in response to touch information.

Preferably, the device is further comprising instructions for determining a size of the object in response to a size of the first region and the number of objects to be displayed in the first region.

Preferably, the device is wherein the instructions for displaying the at least one object, sort the at least one object in response to a sorting condition, and displays the at least one object in the first region in response to sorting order.

Preferably, the device is wherein the sorting condition comprises at least one of an execution order of an object, an execution count of the object, and an execution holding time of the object.

### BRIEF DESCRIPTION OF THE DRAWINGS

The above features and advantages of the present invention will become more apparent from the following detailed description when taken in conjunction with the accompanying drawings in which:
FIG. 1 shows a block diagram of an electronic device according to invention principles;
FIG. 2 shows a block diagram of a processor according to invention principles;
FIG. 3A shows a flowchart of a process for providing a control mode in an electronic device according to invention principles;
FIG. 3B shows a diagram of electronic device units for providing a control mode according to invention principles;
FIG. 4 shows a flowchart of a process for providing a control mode in an electronic device according to invention principles;
FIG. 5 shows a flowchart of a process for determining a page of a control mode region in an electronic device according to invention principles;
FIG. 6A shows a flowchart of a process for providing a control mode in an electronic device according to invention principles;
FIG. 6B shows a diagram of electronic device units for providing a control mode according to invention principles;
FIG. 7 shows a flowchart of a process for providing a control mode in an electronic device according to invention principles;
FIGS. 8A to 8D are diagrams of UI screen images providing a control mode in an electronic device according to invention principles; and
FIGS. 9A to 9D are diagrams of UI screen images providing a control mode in an electronic device according to invention principles.
FIGS. 10A and 10B are diagrams of UI screen images providing a control mode in an electronic device according to an embodiment of the present invention.

### DETAILED DESCRIPTION

Preferred embodiments of the present invention are described herein below with reference to the accompanying drawings. For the purposes of clarity and simplicity, well-known functions or constructions are not described in detail as they would obscure the invention in unnecessary detail. And, terms described below, which are defined considering functions in the present invention, can be different depending on user and operator's intention or practice. Therefore, the terms should be defined on the basis of the disclosure throughout this specification.

The system enables an electronic device to readily manipulate a selectable object displayed in a display region of the electronic device. In the following description, a control mode enables a user of an electronic device to move a selectable object displayed in a display region of the electronic device, to a portion of the display region such to facilitate control. As used herein an electronic device with a touch screen includes a mobile communication terminal providing data communication, a Personal Digital Assistant (PDA), a laptop computer, a smart phone, a netbook, a TeleVision (TV), a Mobile Internet Device (MID), an Ultra Mobile Personal Computer (UMPC), a tablet PC, a navigator, an MPEG Audio Layer 3 (MP3) player, a watch and the like.

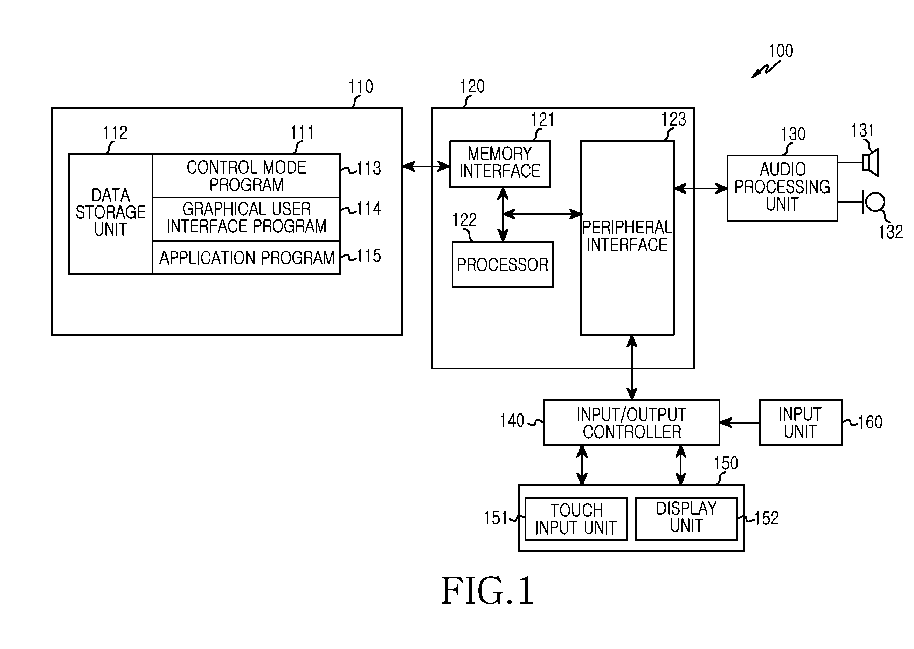

FIG. 1 shows a block diagram of an electronic device. The electronic device 100 includes a memory 110 (comprising one or more memory devices), a processor unit 120, an audio processing unit 130, an input/output controller 140, a touch screen 150, and an input unit 160, or any combination thereof. The memory 110 includes a program storage unit 111 for storing programs for controlling operations of the electronic device 100, and a data storage unit 112 for storing data generated during program execution. The program storage unit 111 includes a control mode(single handed control mode, one hand control mode) program 113, a Graphical User Interface (GUI) program 114, and at least one application program 115. The program included in the program storage unit 111 comprises a set of machine executable instructions and may be expressed as an instruction set.

The data storage unit 112 stores control mode setting information. Here, the control mode setting information includes at least one of a size of a selectable object displayed in a control mode region, a condition of sorting of the selectable object, a control mode region predetermined by a system, and a control mode region set by a user. The control mode program 113 includes at least one software element for moving a selectable object displayed in a display unit 152, to a control mode region. For example, the control mode program 113 moves the selectable object displayed in the display unit 152, to a control mode region predetermined by a system. Also, the control mode program 113 moves the selectable object displayed in the display unit 152, to a control mode region set by a user. The control mode program 113 determines the number of selectable objects to be displayed in the control mode region.

Additionally, the control mode program 113 includes at least one software element for setting a size of a selectable object to be moved to a control mode region, in response to a touch area identified in touch information input by a user. The control mode program 113 automatically sets the size of the selectable object to be moved to the control mode region, in response to a size of the control mode region. Further, the control mode program 113 includes at least one software element for sorting selectable objects in a control mode region, in response to a sorting comprising at least one of, recent execution order, an execution count, and an execution holding time, for example. The graphical user interface program 114 includes at least one software element for graphically providing a user interface on the display unit 152 and to control display of a selectable object in a control mode region by means of the control mode program 113, for example. The graphical user interface program 114 also controls dimming on unit 152 of information items of a selectable object displayed in the control mode region and controls display of a control mode region on the display unit 152.

The application program 115 includes a software element associated with at least one application program installed in the electronic device 100. The processor unit 120 includes a memory interface 121, at least one processor 122, and a peripheral interface 123, that may be integrated together as at least one integrated circuit or comprises separate elements. The memory interface 121 controls the access of an element such as the processor 122 or the peripheral interface 123, to the memory 110. The peripheral interface 123 controls the connection of the processor 122 and the memory interface 121 with input/output peripheral devices of the electronic device 100. Processor 122 controls the electronic device 100 to provide various multimedia services in response to at least one software program. The processor 122 executes at least one program stored in the memory 110 to provide a service in response to the executed program.

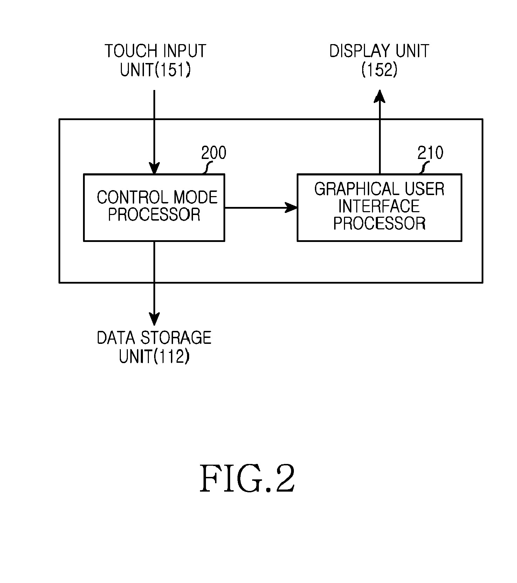

FIG. 2 shows a block diagram of processor 122 executing the control mode program 113 to provide a control mode. Audio processing unit 130 provides an audio interface between a user and the electronic device 100 through a speaker 131 and a microphone 132. The input/output controller 140 provides an interface between the peripheral interface 123 and an input/output device such as the display unit 152, the input unit 160, for example. The touch screen 150 comprises an input/output device performing output of information and input of information and includes a touch input unit 151 and the display unit 152. The touch input unit 151 provides touch information sensed through a touch panel, to the processor unit 120 through the input/output controller 140. The touch input unit 151 provides touch information generated by an electronic pen or a finger, to the processor unit 120 through the input/output controller 140.

The display unit 152 displays status information of the electronic device 100, a character input by a user, a moving picture and a still picture, for example. The display unit 152 displays a selectable object in a control mode region in response to the control of the graphical user interface program 114 and displays the control mode region in response to the graphical user interface program 114. The display unit 152 also dims information items of a selectable object presented in the control mode region in response to the control of the graphical user interface program 114. The input unit 160 provides input data in response to user data entry, to the processor unit 120 through the input/output controller 140. The input unit 160 includes a control button for control of the electronic device 100 or may comprise a keypad for receiving input data from a user.

The electronic device includes a communication unit (not shown) for performing a communication function including voice communication and data communication. The communication unit comprises a plurality of communication sub modules supporting different communication networks. For example, the communication network includes, a Global System for Mobile Communication (GSM) network, an Increased Data GSM Environment (EDGE) network, a Code Division Multiple Access (CDMA) network, a Wireless-Code Division Multiple Access (W-CDMA) network, a Long Term Evolution (LTE) network, an Orthogonal Frequency Division Multiple Access (OFDMA) network, a Wireless Local Area Network (WLAN), a Bluetooth network, Near Field Communication (NFC) and the like.

FIG. 2 shows a block diagram of processor 122 executing the control mode program 113 and including a control mode processor 200 and a graphical user interface processor 210. The control mode processor 200 executes the control mode program 113 of the program storage unit 111 to display a plurality of conversation windows. The control mode processor 200 moves a selectable object displayed in the display unit 152, to a control mode region preset by a system. Further, the control mode processor 200 moves one or more selectable objects displayed on the display unit 152, to a control mode region set by a user. If the selectable objects exceed the number of selectable objects movable to the control mode region, the control mode processor 200 determines the number of selectable objects to be displayed in the control mode region.

The control mode processor 200 includes at least one software element for setting a size of a selectable object to be moved to a control mode, in response to touch area touch information input by a user, or automatically sets the size of the selectable object to be moved to the control mode region, in response to a size of the control mode region. The control mode processor 200 includes at least one software element for sorting selectable objects in a control mode region, in response to a sorting condition comprising at least one of recent execution order, an execution count, and an execution holding time.

The graphical user interface processor 210 executes the graphical user interface program 114 of the program storage unit 111 and graphically provides a user interface on the display unit 152. The graphical user interface processor 210 controls display of a selectable object in a control mode region using control mode processor 200 and controls dimness of display on the display unit 152 of information items of a selectable object displayed in the control mode region. The graphical user interface processor 210 also controls display of a control mode region on the display unit 152. In an embodiment, the electronic device includes a separate control mode processing unit including the control mode program 113.

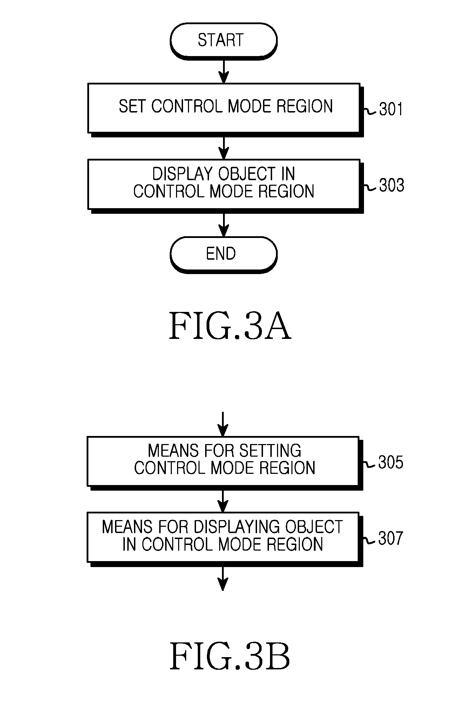

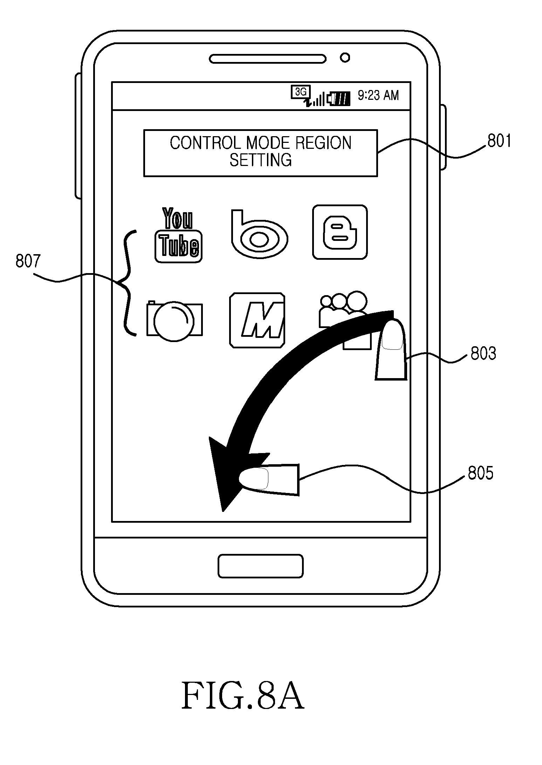

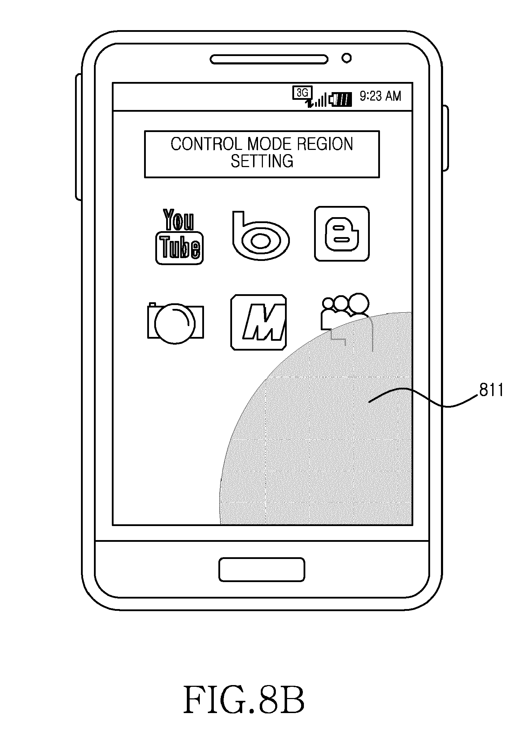

FIG. 3A shows a flowchart of a process for providing a control mode in an electronic device. In step 301, the electronic device sets a control mode region. As illustrated in FIG. 8A, in response to a touch sensed at a first point 803 being dragged to a second point 805, the electronic device determines a control mode region 811 as illustrated in FIG. 8B. The electronic device additionally senses a touch on a 3rd point, increasing the accuracy for control mode region setting. In response to a touch sensed at the first point being dragged to the second point, the electronic device sets a control mode region 811 of fan shape having a radius of a distance from the first point to the second point. Alternatively, in response to a touch sensed at the first point being dragged to the second point, the electronic device may set a control mode region as a square shape having a diagonal of a distance from the first point to the second point or may determine a control mode region as predetermined by the system.

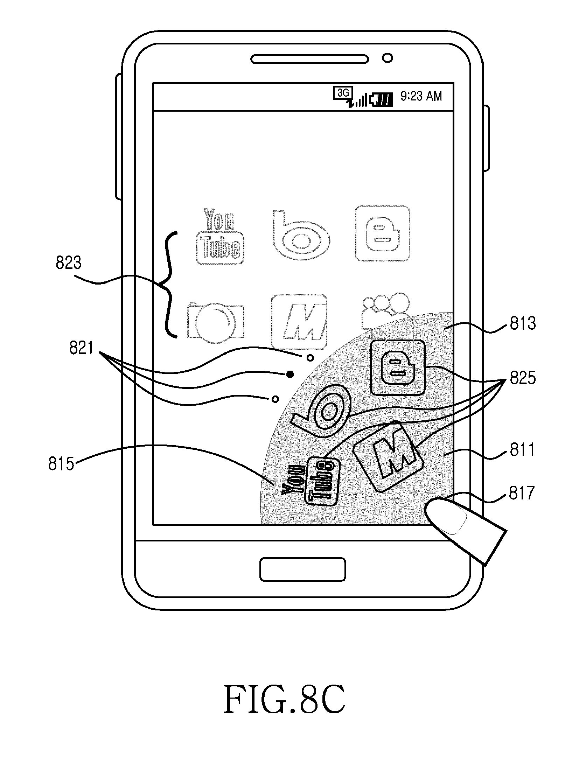

In response to setting the control mode region in step 301, the electronic device in step 303 displays selectable objects in the control mode region. The electronic device displays selectable objects 825 in the control mode region 811 as illustrated in FIG. 8C. If more selectable objects are to be displayed than may be reasonably accommodated in the control mode region, the electronic device displays the selectable objects 825 in region 811 using a plurality of pages. Also, the electronic device dims display of previous objects and information 823 relative to the selectable objects 825. Further, the electronic device turns pages in response to user touch input. For example, if the touch sensed at the first point 813 of the control mode region 811 is dragged toward the second point 815, the electronic device turns to a next page. For another example, if the touch sensed at the second point 815 of the control mode region 811 is dragged toward the first point 813, the electronic device may turn to a previous page. Further, if the touch sensed at the second point 815 of the control mode region 811 is dragged toward a 3rd point 817, the electronic device turns to the last page. Also, if a touch sensed at the 3rd point 817 of the control mode region 811 is dragged toward the second point 815, the electronic device may turn to the first page. Similarly, if the touch sensed at the first point 813 of the control mode region 811 is dragged toward the 3rd point 817, the electronic device may turn to the last page. In addition, if the touch sensed at the 3rd point 817 of the control mode region 811 is dragged toward the first point 813, the electronic device may turn to the first page. The electronic device displays a current page position by a page icon (821) of a different color in response to a total page number and page turning. The electronic device sorts the selectable objects as previously described and the process of Figure 3 terminates.

FIG. 3B shows a diagram of electronic device units for providing a control mode using a first means 305 for setting a control mode region as described in connection with step 301 of Fig. 3A, and a second means 307 for displaying a selectable object in the control mode region as described in connection with step 303 of Fig. 3A.

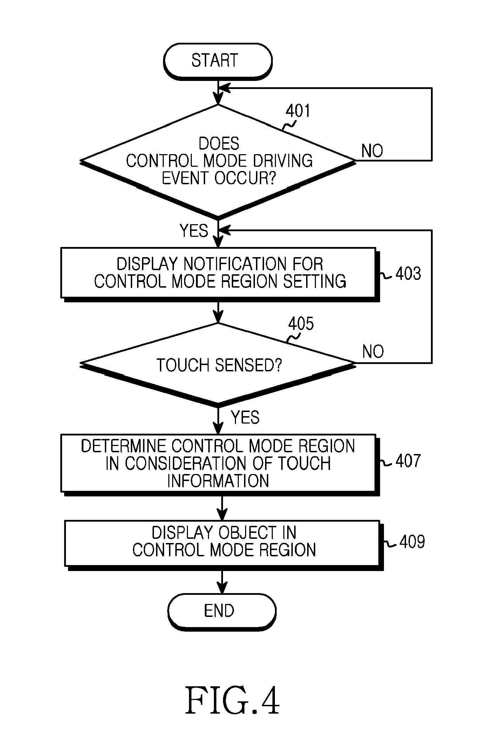

FIG. 4 shows a flowchart of a process for providing a control mode in an electronic device. In step 401, the electronic device determines if a control mode driving event takes place in response to, an associated icon input via a hardware button, hardware button input together with motion information of the electronic device, touch information via a touch screen and touch information via a touch screen with motion information of the electronic device.

If it is determined in step 401 that the control mode driving event occurs, in step 403 a notification of a control mode region setting is displayed. Further, if a touch input is sensed during a reference time at a lower left corner of the touch screen, the electronic device recognizes that a control mode driving event occurs and as illustrated in FIG. 8A, presents message 801 (" control mode region setting"). In step 405, if it is determined that the touch is sensed, the electronic device in step 407 determines a control mode region in response to touch information. For example, if a touch sensed at a first point 803 is dragged to a second point 805 as illustrated in FIG. 8A, the electronic device determines a control mode region 811 as illustrated in FIG. 8B in response to touch information of the first point 803 and 803 to 805 drag information. The electronic device senses a touch on a 3rd point, increasing the accuracy for control mode region setting.

In step 409 the electronic device displays selectable objects in the control mode region. For example, the electronic device displays selectable objects 825 in the control mode region 811 as illustrated in FIG. 8C and in multiple pages and sorts selectable objects as previously described and the process of FIG. 4 terminates. In embodiment, the electronic device determines if the control mode region has been set and displays selectable objects in this region and if no control mode region has been set, the electronic device displays selectable objects in a region predetermined by a system.

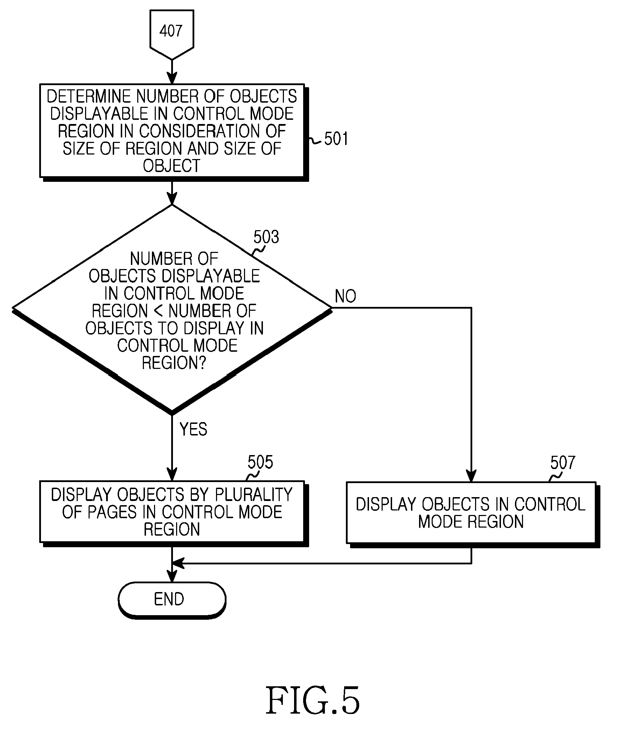

FIG. 5 illustrates a procedure for determining a page of a control mode region in an electronic device. The electronic device determines the control mode region in response to the touch information (in step 407 FIG. 4), as illustrated in FIG. 8B, and in step 501 determines the number of selectable objects 807 (FIG. 8A) displayable in the region 811 in response to a size of region 811 and a size of the selectable objects 807. In step 503 the electronic device determines whether the number of selectable objects displayable in the control mode region is less than the number of selectable objects to be displayed in the control mode region. If the determined number of selectable objects is less than may be displayed, the electronic device in step 505 displays the selectable objects in a plurality of pages in the control mode region. As illustrated in FIG 8C, the electronic device displays selectable objects 825 in a plurality of different pages in control mode region 811 and enables turning of pages as previously described. Further, the electronic device dims display of information items 823 overlapping the control mode region 811.

In step 503, if it is determined that the number of selectable objects is not less than the number of selectable objects displayable, the electronic device recognizes that the control mode region may be presented by one page. and in step 507 displays the selectable objects in the single page. As illustrated in FIG. 8C, the electronic device displays selectable objects 825 in a single page control mode region 811. The electronic device dims display of selectable objects 823 and sorts objects as previously described and the process of FIG. 5 terminates. In an embodiment, if a control mode event occurs, the electronic device determines a size of the selectable object to be used from predetermined size information.

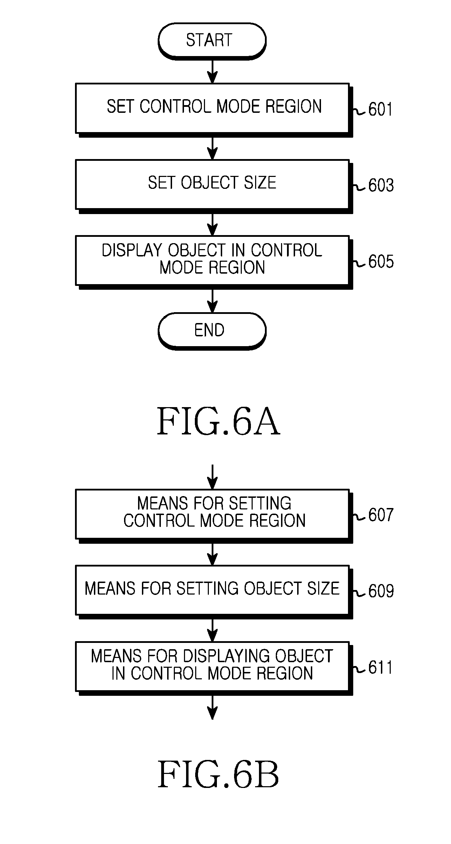

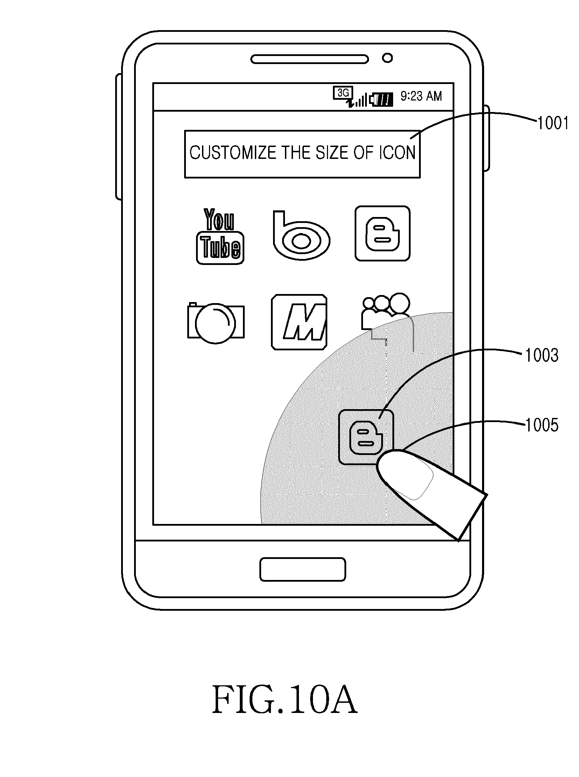

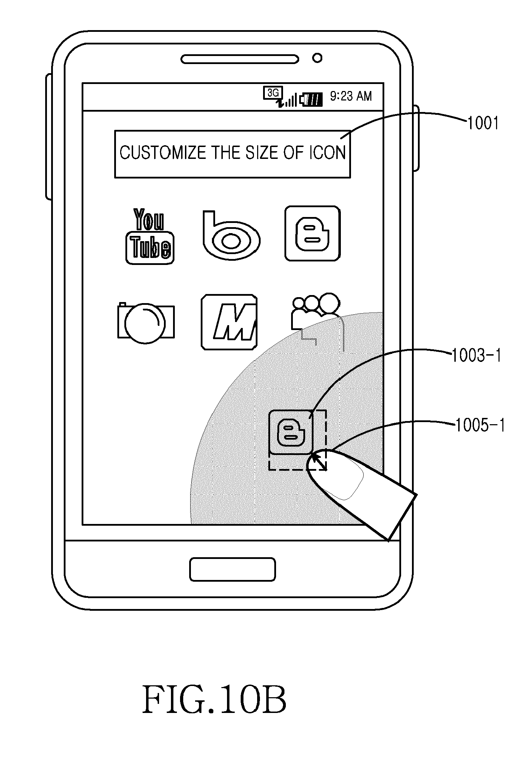

FIG. 6A shows a flowchart of a process for providing a control mode in an electronic device. In step 601, the electronic device sets a control mode region and in step 603 determines a size of a selectable in response to an area of the sensed touch, for example. As illustrated in FIG. 10A, in response to detecting touch 1005 , the electronic device increases the accuracy for determining the size of the selectable object 1003 based on average touch area size or in response to the number of touches or alternatively, determine the size of the selectable object in response to a received input comprising a numerical value 1003-1 as illustrated in FIG. 10B.

In step 605 the electronic device displays the selectable objects in the control mode region such as objects 825 in control mode region 811 as illustrated in FIG. and dims display of previous information items 823.
Additionally, in a case where the electronic device does not determine the size of the selectable object, the electronic device may automatically set the size of the selectable object in response to a size of the control mode region and the process of FIG. 6A terminates.

FIG. 6B illustrates a construction of an electronic device for providing a control mode in an electronic device according to the second exemplary embodiment of the present invention.

Referring to FIG. 6B, the electronic device includes a first means 607 for setting a control mode region, a second means 609 for determining a size of a selectable object, and a 3rd means 611 for displaying the selectable object in the control mode region.

FIG. 6B shows a diagram of electronic device units for providing a control mode. The first means 607 sets a control mode region as previously described in connection with step 301 (FIG. 3) or step 601 (FIG. 6A). The second means 609 sets selected object size as previously described in connection with step 603 (FIG. 6A). The third means 611 displays objects in a control mode region as previously described in connection with step 303 (FIG. 3) or step 605 (FIG. 6A).

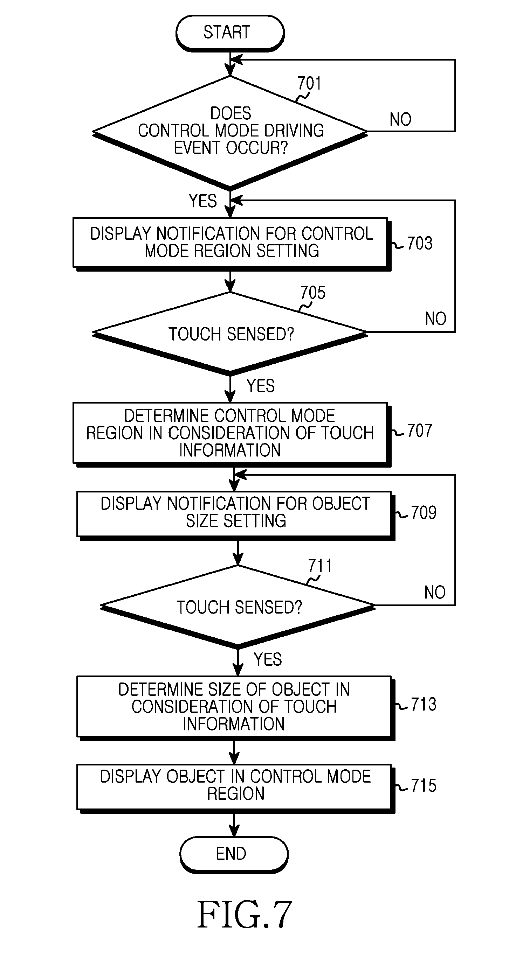

FIG. 7 shows a flowchart of a process for providing a control mode in an electronic device. In step 701, the electronic device determines if a control mode driving event takes place as previously described in connection with FIG. 4. In step 703 the electronic device displays a notification of control mode region setting as previously described in connection with item 801 of FIG. 8A. In step 705 if a touch is sensed, the electronic device in step 707 determines a control mode region in response to touch information as previously described in connection with step 407 of FIG. 4. In step 709 the electronic device displays a notification message on unit 152 indicating selectable object size setting (e.g., "customize the size of icon" 1001 as illustrated in FIG. 10A and FIG 10B.).

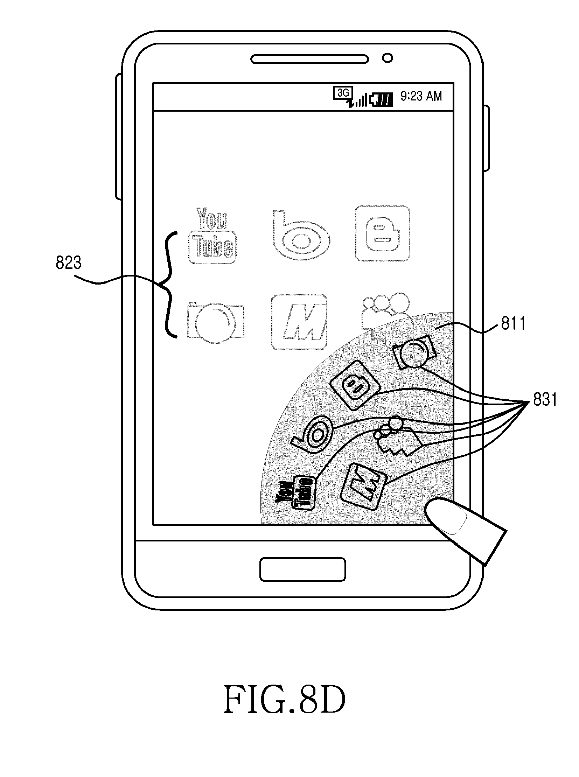

In response o sensing a touch in step 711, the electronic device in step 713 determines a size of a selectable object in response to touch information as previously described. The electronic device may display a test icon to determine the object size in response to a user repeated touch input. So that, if a sensed touch area is smaller than an area of the test icon, the electronic device displays a small icon, if the sensed touch area is larger than the area of the test icon, the electronic device displays a larger icon. In step 715 the electronic device displays the selectable objects in the control mode region such as objects 831 in region 811 as illustrated in FIG. 8D and dims display information items 823 of the selectable objects 825 displayed in the control mode region 811. The device displays objects as one or more pages and sorts the objects as previously described and terminates the FIG. 7 process.

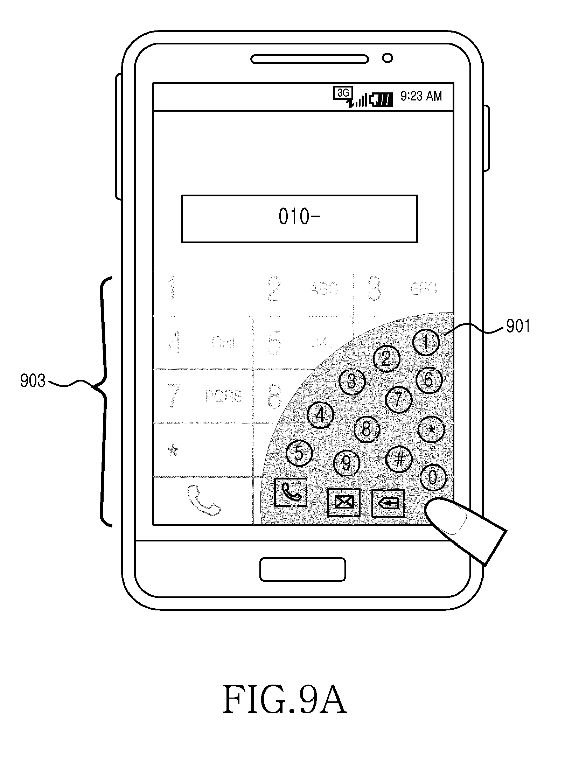

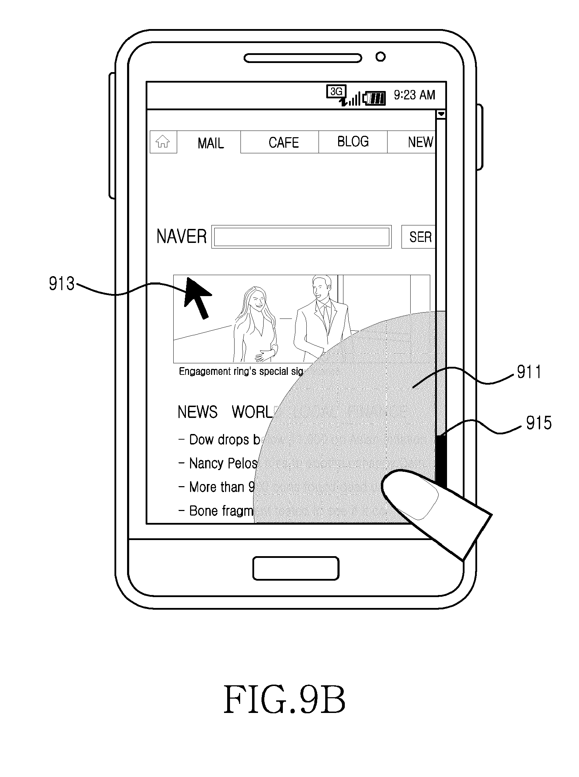

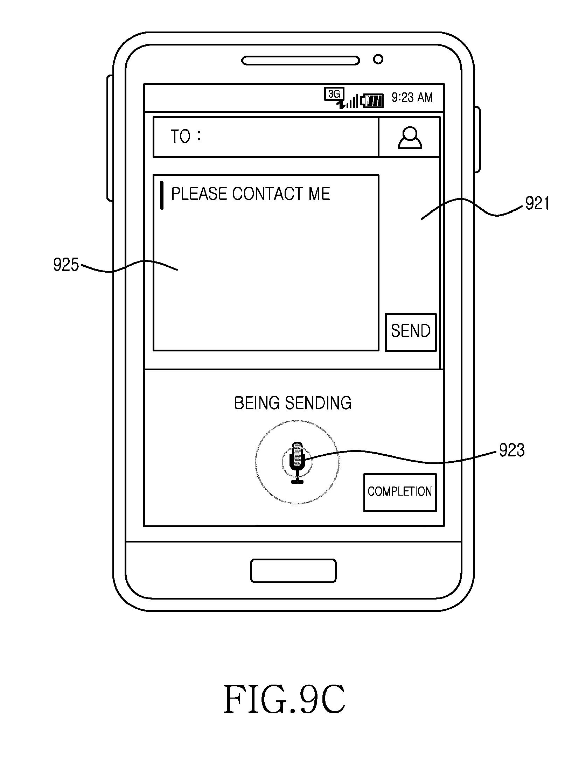

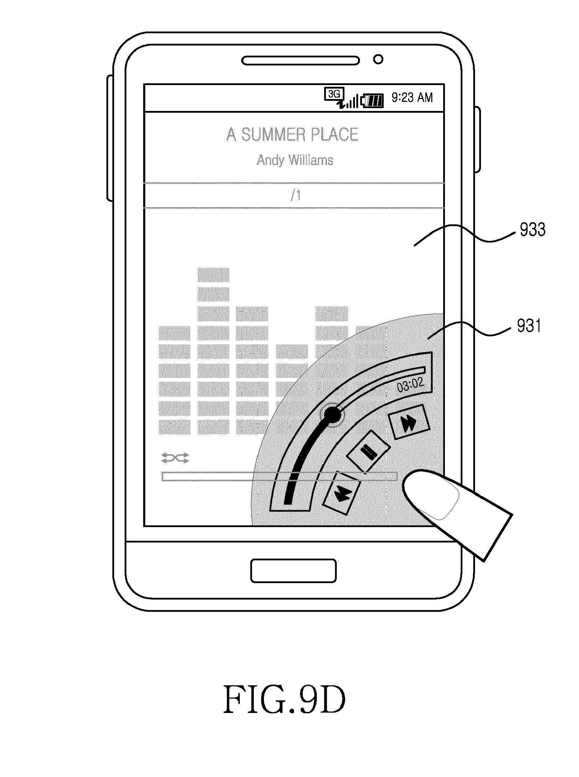

FIGS. 9A to 9D are diagrams of UI screen images providing a control mode in an electronic device. The electronic device in FIG. 9A displays on unit 152 in a control mode region 901 a dialer 903. The electronic device provides a control mode region 911 in FIG. 9B as a virtual touch pad to control contents displayed on unit 152 using mouse pointer 913 and provides a virtual scroller 915 capable of scrolling the contents. The electronic device in FIG. 9C receives (925) an input of a message through a voice recognition service 923 for application program 921 requiring a keypad and being operated during control mode. The electronic device in FIG. 9D displays a control menu of a music play program 933 in a control mode region 931 during a control mode and operation of a music play program.

As described above, the present invention has an advantage that a user of the electronic device can easily manipulate selectable objects displayed in a display region, by rearranging the selectable objects displayed in the display region in a partial region of the display region in an electronic device with a touch screen.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the invention has been shown and described with reference to certain preferred embodiments thereof, it will be understood by those skilled in the art that various changes in form and details may be made therein without departing from the spirit and scope of the invention as defined by the appended claims. No claim element herein is to be construed under the provisions of 35 U.S.C. 112, sixth paragraph, unless the element is expressly recited using the phrase "means for".

## Claims

1. A method in an electronic device, the method comprising:
determining a first region in a displayed area on a screen of the electronic device;
determining a size of at least one object for display in the first region; and
in response to the determined object size, displaying at least one of a plurality of objects within the displayed area, in the first region.

2. The method of claim 1, further comprising, after displaying at least one of a plurality of objects, replacing the at least one object displayed in the first region with at least one other object.

3. The method of claim 1, wherein determining the first region comprises:
if a touch on the display is sensed, determining a partial region of the display area as the first region, in response to touch information.

4. The method of claim 1, wherein determining the size of the at least one object for displaying in the first region comprises:
sensing a touch; and
determining the size of the at least one object for displaying in the first region, in response to a touched area size.

5. The method of claim 1, wherein determining the size of the at least one object comprises determining the size of the at least one object in response to a size of the first region and the number of objects to be displayed in the first region.

6. The method of claim 1, wherein displaying the at least one object comprises:
sorting the at least one object in response to a sorting condition; and
displaying the at least one object in the first region according to sorting order.

7. The method of claim 6, wherein the sorting condition comprises at least one of an execution order of an object, an execution count of the object, and an execution holding time of the object.

8. A method in an electronic device, the method comprising:
determining a first region in a display area;
displaying at least one of a plurality of objects of the display area, in the first region; and
replacing the at least one object displayed in the first region with at least one other object.

9. The method of claim 8, wherein determining the first region comprises:
if a touch on the display area is sensed, determining a partial region of the display area as the first region, in response to touch information.

10. The method of claim 8, further comprising, sensing a touch; and determining the size of the at least one object for displaying in the first region, in response to a touched area size.

11. The method of claim 8, further comprising determining a size of the at least one object in response to a size of the first region and the number of objects to be displayed in the first region.

12. The method of claim 8, wherein displaying the at least one object comprises:
sorting the at least one object in response to a sorting condition; and
displaying the at least one object in the first region according to sorting order.

13. The method of claim 11, wherein the sorting condition comprises at least one of an execution order of an object, an execution count of the object, and an execution holding time of the object.

14. An electronic device comprising a processor unit to perform the method of any one of claims 1 to 13.

15. A computer program product directly loadable into a memory of a programmable device, comprising software code portions for performing the steps of a method according to any of the claims 1 to 13 when said product is run on the device.
